# EUROPEAN PATENT APPLICATION

(11) **EP 1 566 554 A1**
(43) Date of publication of application: **24.08.2005**
(21) Application number: 05003239.0
(22) Date of filing: 16.02.2005
(51) Int. Cl.: F16B 37/04, F16B 7/18

(54) **Slider nut particularly for interconnecting modular elements**

(30) Priority: 20.02.2004 IT TV20040011 U
(71) Applicant: BRUPER S.R.L., (Prov. of Treviso) (IT)
(72) Inventor: Peruzza, Flavio, 31015 Conegliano (Treviso) (IT)
(74) Representative: Modiano, Guido

(57) **Abstract**

A slider (1) particularly for interconnecting two or more modular elements (2), comprising a block (7) that can be associated rigidly with one of the modular elements and can be associated slidingly at a guide or slot (4) provided in one of the modular elements; at least one insert (15) made of elastomeric material is associated with the block (7), interacts with the guide or slot (4), and is suitable to fix elastically the block within the guide or slot (4).

## Description

The present invention relates to a slider particularly for interconnecting modular elements.

Modular elements that are mutually associated in multiple combinations are currently used to provide for example supporting frames for devices of various kinds, such as for example worktables, shelves, pieces of furniture, assembly lines and materials handling devices.

These modular elements have various shapes and dimensions, depending on the applications for which they are intended; the modules that are by far most widely used consist for example of structural profiled elements made of aluminum, having an approximately square or rectangular cross-section, which are mutually connected in order to provide for example grid-like structures or frameworks for the most disparate applications.

The increasing use of these components is facilitated by the ease with which the various parts that constitute a manufactured article are mutually connected.

Easy systems for mutually fixing the parts eliminate (where possible) welding, grinding and finishing work, with unquestionable advantages in the reduction of production costs.

For this purpose, many kinds of predominantly metallic slider are known which can slide within appropriately provided guides formed within the profiled elements and are suitable to allow the mutual fixing of the parts.

Substantially, these are components that have various shapes, with one or more threaded holes.

A first modular element and a second modular element can be interconnected by using one or more sliders, which can be fixed rigidly, typically by means of screws, to the first modular element and can be associated slidingly with one of the one or more guides formed within the second modular element.

These known kinds of slider, typically obtained by drawing or by casting or by sintering, have a transverse cross-section that is shaped approximately complementarily to said guide and therefore can slide longitudinally therein.

Said sliders have a lower surface that interacts by abutment with the guide in order to prevent the escape of the sliders from said guide; at least one hole is formed in said lower surface of each slider and forms a substantially cylindrical and internally threaded seat, with which it is possible to associate an end of the stem of a complementarily threaded screw, which can be rigidly associated with the second modular element, for example in one of the one or more guides formed therein or in a hole provided appropriately therein.

As the screw is screwed into the second modular element, said modular element is drawn toward the lower surface of the slider and the longitudinal ends of said lower surface are therefore pressed simultaneously against the abutments of the guide, detachably coupling to them by friction and therefore mutually fixing the first and second modular elements in a chosen mutual position.

The main drawback of these known types of slider is that since they are conceived to slide within the slots or guides of the profiled elements, these components tend to move randomly along said slots; when the requirement forces the use of a profiled element that has a vertical slot, said elements, being subjected to the force of gravity, all tend to slide downward and then cause, during assembly, a considerable waste of time.

Several manufacturers have attempted to solve this problem by modifying structurally these sliders in a complicated way in order to allow to insert therein a small spring and a ball that is retained within an appropriately provided seat.

The insertion of the slider thus provided in the slot forces the ball, which determines for the slider a dimension that is slightly larger than the dimensions of the slots, to slide in contrast with the spring.

The friction force thus generated by said ball against the internal part of the slot allows to overcome the force of gravity.

Although this solution allows use in vertical slots, it has the unquestionable drawback of having high costs caused by the number and complexity of the processes performed on the slider.

Another known type of slider uses, instead of the spring and ball, a lamina that is fixed in an appropriately provided seat and has an optionally studded blade, which protrudes beyond the seat and undergoes an elastic deformation in the direction toward said lamina once the slider has been placed in the slot.

The main drawback of these known types of slider consists, as in the case of the known types of slider described earlier, of the fact that their manufacture is rather complicated and requires several mechanical processes, and therefore production costs are very high.

Another drawback of known types is that the portion of the blade that is fixed to the respective lamina, in order to allow an effective elastic coupling between the blade and the lamina, is rather thin and therefore can break easily with use.

The aim of the present invention is to solve the above-mentioned problems, eliminating the drawbacks of the cited known art, by providing a slider that can be positioned stably in a chosen position within a guide or slot of a modular element, in order to facilitate the fixing of said modular element to another modular element even for vertically arranged slots.

Within this aim, an object of the invention is to provide a slider that allows to contain the number of processes required to manufacture the slider, thus limiting its production costs.

Another object is to provide a slider that is highly durable.

Another object is to provide a slider that can be applied easily to the guides of common known kinds of modular element.

Another object is to provide a slider that is structurally simple and has low manufacturing costs.

This aim and these and other objects that will become better apparent hereinafter are achieved by a slider particularly for interconnecting two or more modular elements, which comprises a block that can be associated rigidly with one of said modular elements and can be associated slidingly at a guide or slot provided in one of said modular elements, characterized in that at least one insert made of elastomeric material is associated with said block, interacts with said guide or slot, and is suitable to fix elastically said block within said guide or slot.

Further characteristics and advantages of the invention will become better apparent from the following detailed description of a particular but not exclusive embodiment thereof, illustrated by way of non-limiting example in the accompanying drawings, wherein:

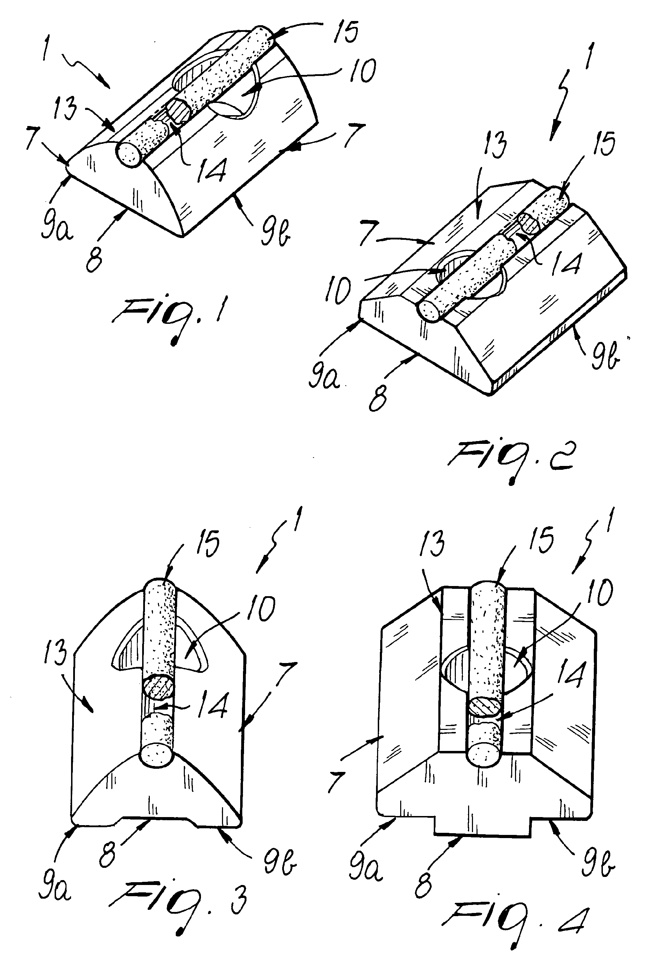

Figures 1 to 5 are perspective views of five different embodiments of a slider according to the invention;

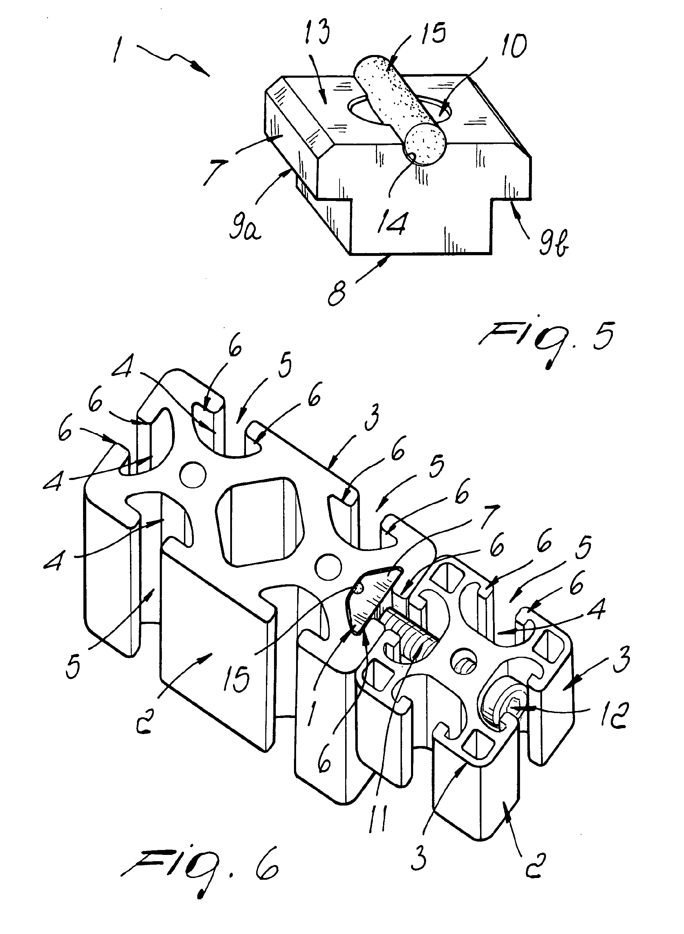

Figure 6 is a perspective view of two modular elements interconnected by means of a slider according to the invention.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the reference numeral 1 designates a slider particularly for mutually fixing modular elements 2 (such as for example structural profiled elements made of aluminum).

The accompanying figures and the description that follows refer, merely by way of example, to two modular elements constituted by aluminum structural profiled elements that have an approximately square and rectangular plan shape.

At least one through guide or slot 4 is provided on at least one face 3 of the lateral surface of each one of the modular elements 2 and is advantageously but not necessarily approximately T-shaped in plan view, so as to form an access opening 5 and two longitudinal abutments 6, which affected said guide or slot 4 along its entire length.

The slider 1 is constituted by a block 7, which is generally metallic, is typically shorter than the guide or slot 4 is deep, and has a transverse cross-section that is advantageously but not necessarily shaped complementarily with respect to the guide or slot 4.

The block 7, advantageously obtained for example by drawing or casting, can therefore have a lower surface 8 that is typically at least centrally flat and in which the ends, designated respectively by the reference numerals 9a and 9b, interact with the abutments 6 of the guide or slot 4.

At least one hole, which is advantageously but not necessarily a through hole, is formed in each block 7 and forms a substantially cylindrical and internally threaded seat 10, with which it is possible to associate a complementarily threaded stem 11 of a screw 12, which can be associated with a different modular element 2.

The block 7 has an upper surface 13, which during use is directed away from the access opening 5 and has an arc-like or polygonal, preferably trapezoidal, shape.

A slot or groove 14 is provided on the upper surface 13 along its entire length and advantageously but not necessarily has an approximately semicircular transverse cross-section; said slot or groove constitutes the seat for an insert 15, which is made of elastomeric material (expanded sponge-like material), which advantageously is at least partially shaped complementarily with respect to the slot or groove 14 and therefore is for example cylindrical.

The insert 15 has, in the illustrated embodiments, conveniently the same length as the slot or groove 14 and has such a diameter as to protrude beyond the groove or slot 14 and beyond the upper surface 13 of the block 7.

The shape and the dimensions of the groove or slot 14 and of the insert 15 may of course be the most disparate according to specific requirements.

The insert 15 can be fixed to the groove or slot 14 of the block 7 for example by adhesive bonding, or can be directly injected or poured into the groove or slot 14 of the block 7.

The use of the slider 1 according to the invention entails providing metallic sliders that are similar in shape to the ones currently in use but are different owing to the presence of the groove or slot 14, which accommodates an insert 15 made of elastomeric material (expanded sponge-like material).

By introducing the block 7 in the guide or slot 4, the insert 15 made of expanded elastomeric material is compressed by the guide or slot 4 and generates on the block 7 friction forces that prevent random movement thereof due to the force of gravity or to vibrations.

Moving the block 7 is any case easy for the user, since a slight pressure on the block 7 is sufficient.

The unquestionable advantage of the proposed solution lies in the significant reduction in the processes performed on the slider 1, with a significant reduction of production costs.

The small groove or slot 14 (which will accommodate the insert 15 made of elastomeric material) can in fact be provided already during the production of the slider (by casting or drawing), while the application of the insert 15 (by pouring expandable material or by adhesive bonding of a sponge-like elastomeric cord) has lower costs than the treatments required in the sliders currently in use.

It has thus been found that the invention has achieved the intended aim and objects, a slider particularly for interconnecting modular elements having been provided which can be positioned stably by the user in a chosen position within a guide or slot of a modular element.

Further, the production process for obtaining the slider according to the invention is very easy and quick, and therefore the production costs of said slider remain low.

Moreover, the slider according to the invention can be used easily to interconnect modular elements of the known type.

Further, the insert made of sponge-like elastomeric material is highly resistant in relation to the stresses to which it is subjected, and therefore the slider according to the invention is highly durable.

The invention is of course susceptible of numerous modifications and variations, all of which are within the scope of the appended claims.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics that are indicated as being advantageous, convenient or the like can also be omitted or be replaced with equivalents.

The disclosures in Italian Patent Application No. TV2004U000011, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A slider particularly for interconnecting two or more modular elements, comprising a block that can be associated rigidly with one of said modular elements and can be associated slidingly at a guide or slot provided in one of said modular elements, **characterized in that** at least one insert made of elastomeric material is associated with said block, interacts with said guide or slot, and is suitable to fix elastically said block within said guide or slot.

2. The slider according to claim 1, **characterized in that** said at least one insert is associated at the upper surface of said block.

3. The slider according to claims 1 and 2, **characterized in that** said at least one insert is associated at a surface of said block that interacts with a facing surface of said guide or slot.

4. The slider according to one or more of the preceding claims, **characterized in that** a slot or groove that constitutes the seat for said at least one insert is formed on the upper surface of said block along part or all of its length.

5. The slider according to claims 1 and 4, **characterized in that** said at least one insert is substantially at least partially shaped complementarily with respect to said groove or slot.

6. The slider according to claims 1 and 5, **characterized in that** said groove or slot has a polygonal transverse cross-section, preferably an approximately semicircular in one.

7. The slider according to claims 1 and 6, **characterized in that** said at least one insert has a preferably cylindrical prism-like shape.

8. The slider according to claim 1, **characterized in that** said at least one insert has such a diameter as to protrude beyond said slot or groove and beyond said surface of said block.

9. The slider according to one or more of the preceding claims, **characterized in that** said groove or slot is provided during the production of said slider, preferably by casting or drawing.

10. The slider according to one or more of the preceding claims, **characterized in that** said at least one insert is fixed to said groove or slot of said block by adhesive bonding.

11. The slider according to one or more of the preceding claims, **characterized in that** said at least one insert is directly injected or poured into said groove or slot of said block.
